(19) Europäisches Patentamt
European Patent Office
Office européen des brevets

(11) EP 4 183 812 A1

(12) EUROPEAN PATENT APPLICATION

(43) Date of publication:
**24.05.2023 Bulletin 2023/21**

(21) Application number: **21209985.7**

(22) Date of filing: **23.11.2021**

(51) International Patent Classification (IPC):
***C08G 69/26** (2006.01)* ***C08L 77/06** (2006.01)*
***C08G 77/448** (2006.01)* ***B82Y 20/00** (2011.01)*

(52) Cooperative Patent Classification (CPC):
(C-Sets available)
**C08G 69/26; C08G 77/448; C08L 77/06;**
B82Y 30/00; C08L 2203/16; C08L 2205/03 (Cont.)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **SHPP Global Technologies B.V.**
**4612 PX Bergen op Zoom (NL)**

(72) Inventors:
- **GÜNBAS, Duygu Deniz**
  **Bergen op Zoom (NL)**
- **HEIN, Christopher Luke**
  **Mount Vernon (US)**
- **VANDORMAEL, Bart**
  **Bergen op Zoom (NL)**
- **VAN ZYL, Andre**
  **Bergen op Zoom (NL)**
- **WIRTZ, Remco**
  **Bergen op Zoom (NL)**

(74) Representative: **Dehns**
**St. Bride's House**
**10 Salisbury Square**
**London EC4Y 8JD (GB)**

# (54) THERMOPLASTIC COMPOSITIONS HAVING IMPROVED TRANSMISSION AND HAZE PROPERTIES

(57) Thermoplastic compositions include: (a) a polyamide component including (1) a polyamide produced by the polycondensation of a diamine component containing 70 mol% or higher of m-xylylenediamine and a dicarboxylic acid component containing 70 mol% or higher of a C4-C20 $\alpha,\omega$-linear aliphatic dicarboxylic acid, (2) copolymers of the polyamide of (1), (3) polyamide blends including the polyamide of (1), or (4) a combination thereof; (b) at least one polycarbonate-siloxane copolymer having a siloxane content of from 5 wt% to 36 wt%; and (c) a copolyestercarbonate copolymer comprising isophthalate-terephthalateresorcinol ester units and polycarbonate monomer units. The thermoplastic compositions have good transmission and haze properties and are suitable for use in display applications.

EP 4 183 812 A1

(52) Cooperative Patent Classification (CPC): (Cont.)

C-Sets
**C08L 77/06, C08L 69/005, C08L 83/10**

## Description

## FIELD OF THE DISCLOSURE

The present disclosure relates to thermoplastic compositions including a polyamide, a polycarbonate-siloxane copolymer and a copolyestercarbonate copolymer, and in particular to thermoplastic compositions having improved transmission and haze properties that are suitable for use in display applications.

## BACKGROUND OF THE DISCLOSURE

Quantum dot enhancement films (QDEFs) have been commercialized by, e.g., Nanosys and Samsung for display applications as a component of liquid crystal displays. In conventional QDEF display applications quantum dots (QDs) are embedded in a polymer matrix. Both upper and lower sides of the formed QD film layer are capped with barrier films to prevent the permeation of oxygen and moisture to the proximity of QDs. Barrier films consist of multiple layers of semi-crystalline polymer and metal oxide, applied via multi-step lamination process. The cost of barrier film is roughly 1/3 of the total film cost and the inclusion of a barrier film doubles or triples the thickness of the QD layer in the final structure. The added thickness makes it less desirable for mobile device applications. Another issue is edge ingress, where the oxygen and water permeate into the quantum dot layer and degrade the QD over time since the edges of the film are not protected by barrier layers. This leads to appearance and color change and performance reduction in the QD films. Therefore, the QD films are not able to meet bezel free display requirements.
QD film formulations to reduce the reliance on barrier films are thus desired. Such formulations can include stabilized QDs which stabilize the QDs against degradation by oxygen or water. The QDs may be stabilized by, e.g., a protective siloxane network encapsulation or a oxide coating. Treatments of this sort may allow the QD to pass through an extruder barrel at elevated temperatures intact and are additionally stable to hydrothermal aging. These films may not require expensive gas barrier polyethylene terephthalate (PET) constructions.
In either pellet or film form, dispersion of QDs in the polymer matrix and thermal stability of QDs are the properties that affect light conversion efficiency, longevity and product cost. While encapsulation, functionalization of QDs and inclusion of a dispersion medium (e.g., carrier polymers) can improve dispersion and thermal stability of QDs to a certain extent, it remains difficult to improve thermal stability while maintaining high fluorescence quantum yield. Furthermore, the dispersion polymer imposes another selection criterion on the final resin matrix, as these two materials need to be compatible with each other. If they are not compatible the optical transparency and optimum dispersion of the QD composition are compromised due to aggregation in the final polymer matrix. The agglomerated QDs not only increase the cost of the QD pellets or films but also lower the quantum yield or reduce conversion efficiency. Another challenge to manufacture a high quality QD film relates to the design or selection of final matrix material. Under typical high temperature extrusion conditions, many polymer materials (e.g., polycarbonate) can go through complex chemical reactions when exposed to a surface layer of semiconducting QDs and catalyzed by the surface chemistry (e.g., acid/base), leading to degradation of the polymer and a loss of mechanical strength, optical clarity, and melt strength. Additionally, ideal matrix polymers should have low oxygen permeability levels to protect QDs from oxygen exposure under blue LED stability testing conditions. Oxygen can migrate to the surface of the QDs, leading to photo-oxidation and subsequent drop in quantum yield in polymer matrices with moderate to high oxygen permeabilities. Further, the suitable matrix material should exhibit sufficient transparency to both primary and secondary light, allowing both primary and secondary light to transmit through the matrix material. Polyamides are excellent candidates due to their superior oxygen barrier properties and high transparencies but their incompatibility with other polymers makes it difficult to design blends while maintaining desirable optical properties such as transmission and haze in these systems. There is a need for transparent blends of thermoplastic resins with polyamides giving excellent dispersion to QDs while protecting them from degradation by oxygen under blue LED light exposure. Moreover, as there are many problems associated with the use of cadmium (Cd) and other heavy metals such as mercury and lead-based materials it is desirable to develop an environmentally friendly Cadmium-free QD thermoplastic compositions.
Various approaches have been developed to protect QDs from degradation by oxygen, water, thermal heating, controlling the composition of their shells and ligands. One of the most commonly approach is based on coating the QD particles with barrier material such as $Al_2O_3$ or $SiO_2$. PCT Publication WO2017096227 describes solvent casted QD film compositions based on $SiO_2$ barrier layer coated CdSe/CdS QDs in a carboxyl acrylate polymer. Such formulations can protect the QDs from exposure to blue LED light over a period of time compared to uncoated CdSe/CdS QDs. Thermal stability of QDs was evaluated by baking the spin-coated QD films at 250°C for up to 30 minutes. Although this provides an indication about the thermal stability of the QD films, it does not demonstrate the extrudability of the QDs for film extrusion as tolerance to high temperature under high shear conditions is required. Furthermore, as the QDs become larger upon coating with the $SiO_2$ barrier layer, absorption per QD weight (Abs/mg) decreases, which significantly increases the QD quantities needed in the composition required to achieve the targeted luminance levels and significantly

increases the cost of the product.

PCT Publication WO 2020/161595 describes QD compositions compounded with 60/40 PMMA/poly(carbonate siloxane) copolymer that provide balanced properties with respect to change in peak wavelength (ΔPWL) and change in full width at half maximum (ΔFWHM) for both green and red QDs. These properties provide the compositions with improved color (white color emission purity) properties. However, such QD compositions are limited to Cd-based compositions as the encapsulation method leads to a large drop in photoluminescence quantum yield (QY) and a broadening of the FWHM of Cd-free QDs. This makes it difficult to achieve a cost competitive melt processed Cd-free QD film having the optical performance which is comparable with the Cd-based offerings. Although the optical properties of such films remains unchanged over a period of time (months) under air exposure, they are not able to meet blue LED light stability test requirements due to higher oxygen barrier needs.

Accordingly, there is a need for melt processable, stable, thermoplastic compositions with good transmission and haze values that would be suitable for use in display applications, and in particular semiconductor nanocrystal/quantum dot applications.

These and other shortcomings are addressed by aspects of the present disclosure.

## SUMMARY

Aspects of the disclosure relate to thermoplastic compositions including: (a) a polyamide component including (1) a polyamide produced by the polycondensation of a diamine component containing 70 mol% or higher of m-xylylenediamine and a dicarboxylic acid component containing 70 mol% or higher of a C4-C20 $\alpha,\omega$-linear aliphatic dicarboxylic acid, (2) copolymers of the polyamide of (1), (3) polyamide blends including the polyamide of (1), or (4) a combination thereof; (b) at least one polycarbonate-siloxane copolymer having a siloxane content of from 5 wt% to 36 wt%; and (c) a copolyestercarbonate copolymer including isophthalate-terephthalate-resorcinol ester units and polycarbonate monomer units. The thermoplastic compositions have good transmission and haze properties and are suitable for use in display applications.

## DETAILED DESCRIPTION

The present disclosure relates to thermoplastic compositions including polyamide, poly(carbonate-siloxane) and copolyestercarbonate copolymers. The compositions are compatible with the use of photoluminescent materials (e.g., quantum dots, semiconductor nanocrystals, photoluminescent nanoparticles).

Before the present compounds, compositions, articles, systems, devices, and/or methods are disclosed and described, it is to be understood that they are not limited to specific synthetic methods unless otherwise specified, or to particular reagents unless otherwise specified, as such can, of course, vary. It is also to be understood that the terminology used herein is for the purpose of describing particular aspects only and is not intended to be limiting.

Various combinations of elements of this disclosure are encompassed by this disclosure, e.g., combinations of elements from dependent claims that depend upon the same independent claim.

Moreover, it is to be understood that unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is in no way intended that an order be inferred, in any respect. This holds for any possible non-express basis for interpretation, including: matters of logic with respect to arrangement of steps or operational flow; plain meaning derived from grammatical organization or punctuation; and the number or type of aspects described in the specification.

All publications mentioned herein are incorporated herein by reference to disclose and describe the methods and/or materials in connection with which the publications are cited.

### Definitions

It is also to be understood that the terminology used herein is for the purpose of describing particular aspects only and is not intended to be limiting. As used in the specification and in the claims, the term "comprising" can include the aspects "consisting of" and "consisting essentially of." Unless defined otherwise, all technical and scientific terms used herein have the same meaning as commonly understood by one of ordinary skill in the art to which this disclosure belongs. In this specification and in the claims which follow, reference will be made to a number of terms which shall be defined herein.

As used in the specification and the appended claims, the singular forms "a," "an" and "the" include plural referents unless the context clearly dictates otherwise. Thus, for example, reference to "a polyamide" includes mixtures of two or more polyamide polymers.

As used herein, the term "combination" is inclusive of blends, mixtures, alloys, reaction products, and the like.

Ranges can be expressed herein as from one value (first value) to another value (second value). When such a range is expressed, the range includes in some aspects one or both of the first value and the second value. Similarly, when values are expressed as approximations, by use of the antecedent 'about,' it will be understood that the particular value forms another aspect. It will be further understood that the endpoints of each of the ranges are significant both in relation to the other endpoint, and independently of the other endpoint. It is also understood that there are a number of values disclosed herein, and that each value is also herein disclosed as "about" that particular value in addition to the value itself. For example, if the value "10" is disclosed, then "about 10" is also disclosed. It is also understood that each unit between two particular units are also disclosed. For example, if 10 and 15 are disclosed, then 11, 12, 13, and 14 are also disclosed.

As used herein, the terms "about" and "at or about" mean that the amount or value in question can be the designated value, approximately the designated value, or about the same as the designated value. It is generally understood, as used herein, that it is the nominal value indicated $\pm$10% variation unless otherwise indicated or inferred. The term is intended to convey that similar values promote equivalent results or effects recited in the claims. That is, it is understood that amounts, sizes, formulations, parameters, and other quantities and characteristics are not and need not be exact, but can be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such. It is understood that where "about" is used before a quantitative value, the parameter also includes the specific quantitative value itself, unless specifically stated otherwise.

Disclosed are the components to be used to prepare the compositions of the disclosure as well as the compositions themselves to be used within the methods disclosed herein. These and other materials are disclosed herein, and it is understood that when combinations, subsets, interactions, groups, etc. of these materials are disclosed that while specific reference of each various individual and collective combinations and permutation of these compounds cannot be explicitly disclosed, each is specifically contemplated and described herein. For example, if a particular compound is disclosed and discussed and a number of modifications that can be made to a number of molecules including the compounds are discussed, specifically contemplated is each and every combination and permutation of the compound and the modifications that are possible unless specifically indicated to the contrary. Thus, if a class of molecules A, B, and C are disclosed as well as a class of molecules D, E, and F and an example of a combination molecule, A-D is disclosed, then even if each is not individually recited each is individually and collectively contemplated meaning combinations, A-E, A-F, B-D, B-E, B-F, C-D, C-E, and C-F are considered disclosed. Likewise, any subset or combination of these is also disclosed. Thus, for example, the sub-group of A-E, B-F, and C-E would be considered disclosed. This concept applies to all aspects of this application including, but not limited to, steps in methods of making and using the compositions of the disclosure. Thus, if there are a variety of additional steps that can be performed it is understood that each of these additional steps can be performed with any specific aspect or combination of aspects of the methods of the disclosure.

References in the specification and concluding claims to parts by weight of a particular element or component in a composition or article, denotes the weight relationship between the element or component and any other elements or components in the composition or article for which a part by weight is expressed. Thus, in a compound containing 2 parts by weight of component X and 5 parts by weight component Y, X and Y are present at a weight ratio of 2:5, and are present in such ratio regardless of whether additional components are contained in the compound.

A weight percent of a component, unless specifically stated to the contrary, is based on the total weight of the formulation or composition in which the component is included.

As used herein, the terms "number average molecular weight" or "$M_n$" can be used interchangeably, and refer to the statistical average molecular weight of all the polymer chains in the sample and is defined by the formula:

$$M_n = \frac{\sum N_i M_i}{\sum N_i},$$

where $M_i$ is the molecular weight of a chain and $N_i$ is the number of chains of that molecular weight. $M_n$ can be determined for polymers, e.g., polycarbonate polymers, by methods well known to a person having ordinary skill in the art using molecular weight standards, e.g. polycarbonate standards or polystyrene standards, preferably certified or traceable molecular weight standards.

As used herein, the terms "weight average molecular weight" or "$M_w$" can be used interchangeably, and are defined by the formula:

$$M_w = \frac{\sum N_i M_i^2}{\sum N_i M_i},$$

where $M_i$ is the molecular weight of a chain and $N_i$ is the number of chains of that molecular weight. Compared to $M_n$, $M_w$ takes into account the molecular weight of a given chain in determining contributions to the molecular weight average. Thus, the greater the molecular weight of a given chain, the more the chain contributes to the $M_w$. $M_w$ can be determined for polymers, e.g., polycarbonate polymers, by methods well known to a person having ordinary skill in the art using molecular weight standards, e.g., polycarbonate standards or polystyrene standards, preferably certified or traceable molecular weight standards.

As used herein, the terms "polydispersity index" or "PDI" can be used interchangeably, and are defined by the formula:

$$PDI = \frac{M_w}{M_n}.$$

The PDI has a value equal to or greater than 1, but as the polymer chains approach uniform chain length, the PDI approaches unity.

The terms "BisA," "BPA," or "bisphenol A," which can be used interchangeably, as used herein refers to a compound having a structure represented by the formula:

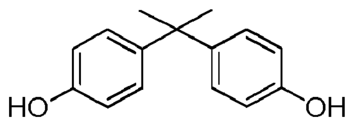

BisA can also be referred to by the name 4,4'-(propane-2,2-diyl)diphenol; p,p'-isopropylidenebisphenol; or 2,2-bis(4-hydroxyphenyl)propane. BisA has the CAS # 80-05-7.

As used herein, "polycarbonate" refers to an oligomer or polymer including residues of one or more dihydroxy compounds, e.g., dihydroxy aromatic compounds, joined by carbonate linkages; it also encompasses homopolycarbonates, copolycarbonates, and (co)polyester carbonates.

The terms "residues" and "structural units," used in reference to the constituents of the polymers, are synonymous throughout the specification.

As used herein the terms "weight percent," "wt%," and "wt. %," which can be used interchangeably, indicate the percent by weight of a given component based on the total weight of the composition, unless otherwise specified. That is, unless otherwise specified, all wt% values are based on the total weight of the composition. It should be understood that the sum of wt% values for all components in a disclosed composition or formulation are equal to 100.

Unless otherwise stated to the contrary herein, all test standards are the most recent standard in effect at the time of filing this application.

Each of the materials disclosed herein are either commercially available and/or the methods for the production thereof are known to those of skill in the art.

It is understood that the compositions disclosed herein have certain functions. Disclosed herein are certain structural requirements for performing the disclosed functions and it is understood that there are a variety of structures that can perform the same function that are related to the disclosed structures, and that these structures will typically achieve the same result.

**Thermoplastic Compositions**

Aspects of the disclosure relate to thermoplastic compositions including: (a) a polyamide component including (1) a polyamide produced by the polycondensation of a diamine component containing 70 mol% or higher of m-xylylenediamine and a dicarboxylic acid component containing 70 mol% or higher of a C4-C20 $\alpha,\omega$-linear aliphatic dicarboxylic acid, (2) copolymers of the polyamide of (1), (3) polyamide blends including the polyamide of (1), or (4) a combination thereof; (b) at least one polycarbonate-siloxane copolymer having a siloxane content of from 5 wt% to 36 wt%; and (c) a copolyestercarbonate copolymer including isophthalate-terephthalate-resorcinol ester units and polycarbonate monomer units.

The polyamide component includes a polyamide produced by the polycondensation of a diamine component

containing 70 mol% or higher of meta(m)-xylylenediamine and a dicarboxylic acid component containing 70 mol% or higher of a C4-C20 α,ω-linear aliphatic dicarboxylic acid.

The diamine component may include any other diamine so long as it includes the m-xylylenediamine in an amount of not less than 70 mol %. Examples of other diamines include, but are not limited to, para(p)-xylylenediamine, orthoxylylenediamine, bisaminomethylcyclohexane, tetramethylenediamine, pentamethylenediamine, hexamethylenediamine, heptamethylenediamine, octamethylenediamine, nonamethylenediamine, orthophenylenediamine, metaphenylenediamine and paraphenylenediamine. These other diamines can be used individually or in a combination with two or more diamines together with the m-xylylenediamine.

Use of the dicarboxylic acid component containing 70 mol% or higher of a C4-C20 α,ω-linear aliphatic dicarboxylic acid enables the polyamide resin to exhibit practicable properties. Representative examples of the dicarboxylic acid component include, but are not limited to, adipic acid and sebacic acid. These dicarboxylic acids can be used individually or in combination. The dicarboxylic acid component may include any other dicarboxylic acid so long as it includes the above α,ω-aliphatic dicarboxylic acid in an amount of not less than 70 mol %. Other dicarboxylic acids include, but are not limited to, aromatic dicarboxylic acids such as isophthalic acid and terephthalic acid.

The polyamide component may have a molecular weight large enough for forming a film. An exemplary polyamide component suitable for use in aspects of the disclosure includes, but is not limited to, polyamide-MXD6. Polyamide-MXD6 is a polyamide derived from meta-xylylenediamine (m-xylylenediamine) (MXDA). Specifically, polyamide-MXD6 is a crystalline polyamide produced by polycondensation of MXDA with adipic acid. In contrast to polyamide 6 and polyamide 66, polyamide-MXD6 is an aliphatic polyamide and includes an aromatic ring in its main chain. The different chemical structures of these polyamides is shown below:

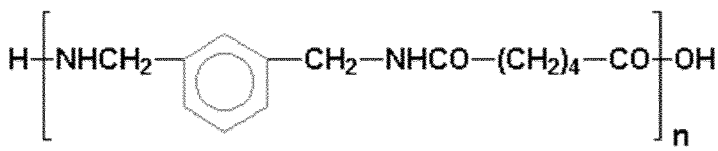

Polyamide MXD6

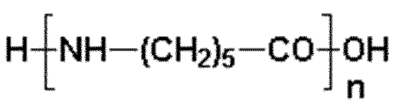

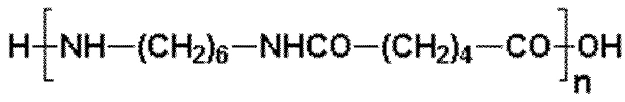

Polyamide 6

Polyamide 66

Polyamide-MXD6 has lower water absorption and moisture permeability, greater strength and elastic modulus and higher glass transition and heat deflection temperature than conventional polyamide 6 and polyamide 66. Its gas-barrier properties against oxygen and carbon dioxide are very good and can exceed those of many copolymer resins including ethylene vinyl alcohol (EVOH), vinylidene chloride (PVDC), and acrylonitrile (PAN); although it does have lower impact strength, higher density, and much lower tensile elongation than conventional polyamides. Polyamide-MXD6 also has excellent flowability, dimensional stability and creep resistance; accordingly it is suitable for use in injection molding and extrusion properties.

In some aspects the polyamide component includes copolymers of the polyamide produced by the polycondensation of a diamine component containing 70 mol% or higher of m-xylylenediamine and a dicarboxylic acid component containing 70 mol% or higher of a C4-C20 α,ω-linear aliphatic dicarboxylic acid. In further aspects the polyamide component includes polyamide blends including the polyamide produced by the polycondensation of a diamine component containing 70 mol% or higher of m-xylylenediamine and a dicarboxylic acid component containing 70 mol% or higher of a C4-C20 α,ω-linear aliphatic dicarboxylic acid.

The composition includes at least one polycarbonate-siloxane copolymer having a siloxane content of from 5 wt% to 36 wt%. In one aspect the at least one polycarbonate-siloxane copolymer is transparent or opaque. In further aspects the composition includes a first polycarbonate-siloxane copolymer having a siloxane content of from 5 wt% to 10 wt% and a second polycarbonate-siloxane copolymer having a siloxane content of from 15 wt% to 25 wt%.

The copolyestercarbonate copolymer may include ester units of the formula

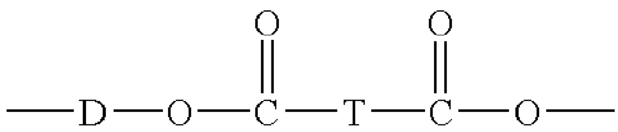

wherein D is a divalent group derived from a dihydroxy compound, and may be, for example, a $C_{2-30}$ alkylene group, a $C_{3-30}$ alicyclic group, a $C_{6-30}$ aromatic group or a polyoxyalkylene group in which the alkylene groups contain 2 to 6 carbon atoms, specifically 2, 3, or 4 carbon atoms; and T divalent group derived from a dicarboxylic acid, and may be, for example, a $C_{2-30}$ alkylene group, a $C_{6-30}$ alicyclic group, a $C_{6-30}$ alkyl aromatic group, or a $C_{6-30}$ aromatic group.

Examples of aromatic dicarboxylic acids from which the T group in the ester is derived include isophthalic or terephthalic acid, 1,2-di(p-carboxyphenyl)ethane, 4,4'-dicarboxydiphenyl ether, 4,4'-bisbenzoic acid, and combinations including at least one of the foregoing acids. Acids containing fused rings can also be present, such as in 1,4-, 1,5-, or 2,6-naphthalenedicarboxylic acids. Specific dicarboxylic acids are terephthalic acid, isophthalic acid, naphthalene dicarboxylic acid, cyclohexane dicarboxylic acid, or combinations thereof. A specific dicarboxylic acid includes a combination of isophthalic acid and terephthalic acid wherein the weight ratio of isophthalic acid to terephthalic acid is 99:1 to 1:99. In an aspect, D is a $C_{2-6}$ alkylene group and T is p-phenylene, m-phenylene, naphthalene, a divalent cycloaliphatic group, or a combination thereof. This class of polyester includes the poly(alkylene terephthalates).

In an aspect, the ester units of the polyester or polyester block include arylate ester units derived from the reaction product of one equivalent of an isophthalic acid derivative and/or terephthalic acid derivative with a resorcinol of the formula

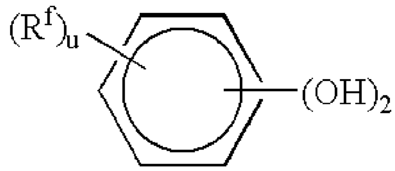

wherein each $R^f$ is independently $C_{1-12}$ alkyl, or halogen, and u is 0 to 4. It will be understood that $R^f$ is hydrogen when u is 0. Typically, the halogen can be chlorine or bromine. In an aspect, compounds in which the -OH groups are substituted meta to one another, and wherein $R^f$ and u are as described above, are also generally referred to herein as resorcinols. Examples of compounds that may be represented by this formula include resorcinol (where u is 0), substituted resorcinol compounds such as 5-methyl resorcinol, 5-ethyl resorcinol, 5-propyl resorcinol, 5-butyl resorcinol, 5-t-butyl resorcinol, 5-phenyl resorcinol, 5-cumyl resorcinol, 2,4,5,6-tetrafluoro resorcinol, 2,4,5,6-tetrabromo resorcinol, or the like; catechol; hydroquinone; substituted hydroquinones such as 2-methyl hydroquinone, 2-ethyl hydroquinone, 2-propyl hydroquinone, 2-butyl hydroquinone, 2-t-butyl hydroquinone, 2-phenyl hydroquinone, 2-cumyl hydroquinone, 2,3,5,6-tetramethyl hydroquinone, 2,3,5,6-tetra-t-butyl hydroquinone, 2,3,5,6-tetrafluoro hydroquinone, 2,3,5,6-tetrabromo hydroquinone, or the like; or combinations including at least one of the foregoing compounds.

Such arylate ester units are also referred to herein as isophthalate-terephthalate-resorcinol ester units, sometimes referred to in abbreviated form as ITR ester units. As used herein, isophthalate-terephthalate-resorcinol ester units include a combination isophthalate esters, terephthalate esters, and resorcinol esters. In a specific aspect, isophthalate-terephthalate-resorcinol ester units include a combination of isophthalate-resorcinol ester units and terephthalate-resorcinol ester units, wherein the molar ratio of isophthalate-resorcinol ester units to terephthalate-resorcinol ester units is 99:1 to 1:99, or 95:5 to 5:95, or 90:10 to 10:90, or 80:20 to 20:80. In a specific aspect, where u is 0, the arylate ester units include isophthalate-terephthalate-resorcinol ester units in which the resorcinol is 1,3-dihydroxybenzene. Exemplary aromatic polyester blocks include poly(isophthalate-terephthalate-resorcinol) esters, poly(isophthalate-terephthalate-bisphenol-A) esters, poly[(isophthalate-terephthalate-resorcinol) ester-co-(isophthalate-terephthalate-bisphenol-A)] ester, or a combination including at least one of these. In an aspect, a useful arylate polyester block is a poly(isophthalate-terephthalate-resorcinol) ester. In yet further aspects the copolyestercarbonate copolymer has a ratio of isophthalate-terephthalate-resorcinol ester units to polycarbonate monomer units of from 20:80 to 90:10, or from 25:75 to 15:85, or from 22:78 to 18:82, or 20:80.

In specific aspects the thermoplastic composition includes: from 59 wt% to 98.5 wt% of the polyamide component; from 1 wt% to 40 wt% of the at least one polycarbonate-siloxane copolymer having a siloxane content of from 5 wt% to 36 wt%; and from 0.5 wt% to 35 wt% of the copolyestercarbonate copolymer.

In further aspects the thermoplastic composition includes from 75 wt% to 97 wt% of the polyamide component; from 2 wt% to 24 wt% of the at least one polycarbonate-siloxane copolymer having a siloxane content of from 5 wt% to 36 wt%; and from 1 wt% to 23 wt% of the copolyestercarbonate copolymer.

In a particular aspect the thermoplastic composition includes about 70 wt% of the polyamide component; about 25 wt% of the at least one polycarbonate-siloxane copolymer having a siloxane content of from 5 wt% to 36 wt%; and about 5 wt% of the copolyestercarbonate copolymer.

In certain aspects the composition includes from 1.5 wt% to 15 wt% of a first polycarbonate-siloxane copolymer having a siloxane content of from 15 wt% to 25 wt% and from 4.5 wt% to 15 wt% of a second polycarbonate-siloxane copolymer having a siloxane content of from 5 wt% to 10 wt%.

The thermoplastic composition may include at least one additional additive. The at least one additional additive may include, but is not limited to, an acid scavenger, an anti-drip agent, a thermal stabilizer, an antioxidant, an antistatic agent, a chain extender, a colorant, a flow promoter, a lubricant, a mold release agent, a plasticizer, a quenching agent, a flame retardant, a UV absorber, an impact modifier, a blowing agent, a reinforcing agent, glass flakes, glass spheres, mineral fillers, a phenolic antioxidant, a phosphite stabilizer, or a combination thereof.

Thermoplastic compositions according to aspects of the disclosure have improved transmission and haze values as compared to conventional compositions that do not include the recited polyamide component, polycarbonate-siloxane copolymer and copolyestercarbonate copolymer components. In some aspects the composition has a transmission of at least 72% and a haze of less than 50%, as measured in accordance with ASTM D1003, illuminant C, at a thickness of 0.8 millimeter. Transmission and haze may be measured using a BYK haze-gard I from BYK-Gardner instruments. In further aspects the composition has a transmission of at least 73%, or at least 74%, or at least 75%, as measured in accordance with ASTM D1003, illuminant C, at a thickness of 0.8 millimeter. In yet further aspects the composition has a haze of less than 49%, or less than 48%, or less than 47%, or less than 46%, or less than 45%, or less than 44%, or less than 43%, or less than 42%, or less than 41%, or less than 40%, as measured in accordance with ASTM D1003, illuminant C, at a thickness of 0.8 millimeter.

Compositions according to aspects of the disclosure may also have good compounding and film processability properties.

## Semiconductor Nanocrystal Compositions

Aspects of the disclosure further relate to thermoplastic compositions including: (a) a polyamide component comprising (1) a polyamide produced by the polycondensation of a diamine component containing 70 mol% or higher of m-xylylenediamine and a dicarboxylic acid component containing 70 mol% or higher of a C4-C20 $\alpha,\omega$-linear aliphatic dicarboxylic acid, (2) copolymers of the polyamide of (1), (3) polyamide blends comprising the polyamide of (1), or (4) a combination thereof; (b) at least one polycarbonate-siloxane copolymer having a siloxane content of from 5 wt% to 36 wt%; (c) a copolyestercarbonate copolymer including isophthalate-terephthalate-resorcinol ester units and polycarbonate monomer units; and (d) a plurality of semiconductor nanocrystals.

In some aspects the semiconductor nanocrystals include photoluminescent materials, photoluminescent nanoparticles and quantum dots. In a particular aspect the semiconductor nanocrystals include quantum dots.

In certain aspects the semiconductor nanocrystals are stabilized for application use. The semiconductor nanocrystals can include polydimethylsiloxane (PDMS) ligands. Ligands may include modified polysiloxane with a capping agent. Exemplary capping agents are described in, e.g., U.S. Patent No. 9,663,710, the disclosure of which is incorporated herein by this reference in its entirety.

Thermoplastic compositions according to aspects of the disclosure may include from 0.1 wt% to 3.0 wt% semiconductor nanocrystals, or from 0.1 wt% to 2 wt% semiconductor nanocrystals, or from 0.1 wt% to 1 wt% semiconductor nanocrystals. The compositions may further include green semiconductor nanocrystals and red semiconductor nanocrystals.

## Methods of Manufacture

The one or any foregoing components described herein may be first dry blended with each other, or dry blended with any combination of foregoing components, then fed into an extruder from one or multi-feeders, or separately fed into an extruder from one or multi-feeders. The fillers used in the disclosure may also be first processed into a masterbatch, then fed into an extruder. The components may be fed into the extruder from a throat hopper or any side feeders.

The extruders used in the disclosure may have a single screw, multiple screws, intermeshing co-rotating or counter rotating screws, non-intermeshing co-rotating or counter rotating screws, reciprocating screws, screws with pins, screws with screens, barrels with pins, rolls, rams, helical rotors, co-kneaders, disc-pack processors, various other types of extrusion equipment, or combinations including at least one of the foregoing.

The components may also be mixed together and then melt-blended to form the thermoplastic compositions. The melt blending of the components involves the use of shear force, extensional force, compressive force, ultrasonic energy, electromagnetic energy, thermal energy or combinations including at least one of the foregoing forces or forms of energy.

The barrel temperature on the extruder during compounding can be set at the temperature where at least a portion of the polymer has reached a temperature greater than or equal to about the melting temperature, if the resin is a semi-crystalline organic polymer, or the flow point (e.g., the glass transition temperature) if the resin is an amorphous resin.

The mixture including the foregoing mentioned components may be subject to multiple blending and forming steps if desirable. For example, the thermoplastic composition may first be extruded and formed into pellets. The pellets may then be fed into a molding machine where it may be formed into any desirable shape or product. Alternatively, the thermoplastic composition emanating from a single melt blender may be formed into sheets or strands and subjected to post-extrusion processes such as annealing, uniaxial or biaxial orientation.

The temperature of the melt in the present process may in some aspects be maintained as low as possible in order to avoid excessive thermal degradation of the components. In certain aspects the melt temperature is maintained between about 230°C and about 350°C, although higher temperatures can be used provided that the residence time of the resin in the processing equipment is kept relatively short. In some aspects the melt processed composition exits processing equipment such as an extruder through small exit holes in a die. The resulting strands of molten resin may be cooled by passing the strands through a water bath. The cooled strands can be chopped into pellets for packaging and further handling.

**Articles of Manufacture**

In certain aspects, the present disclosure pertains to shaped, formed, or molded articles including the thermoplastic compositions. The thermoplastic compositions can be molded into useful shaped articles by a variety of means such as injection molding, extrusion, rotational molding, blow molding and thermoforming to form articles and structural components of, for example, personal or commercial electronics devices, including but not limited to cellular telephones, tablet computers, personal computers, notebook and portable computers, and other such equipment, medical applications, RFID applications, automotive applications, sunlight converters for greenhouses, luminescent solar concentrators, photovoltaic applications, and the like. In a further aspect, the article is extrusion molded. In still further aspects, the article is injection molded, co-extruded, or a multi-layer film. In yet further aspects the composition can be used in a multilayer stack as a core layer film which can be co-laminated between two polyolefinic, polyester, COC or fluorinated polymer films. The film can also be coated with metal oxides via atomic layer deposition (ALD). In a particular aspect the article is a quantum dot enhancement film (QDEF). Multi-layer and extruded or co-extruded films according to aspects of the disclosure may have a film thickness of from 10 micron ($\mu$m) to 2.0 mm, or from 10 $\mu$m to 1.5 mm, or from 10 $\mu$m to 1.0 mm, or from 10 $\mu$m to 500 $\mu$m, or from 150 $\mu$m to 250 $\mu$m, or from 175 $\mu$m to 225 $\mu$m.

Various combinations of elements of this disclosure are encompassed by this disclosure, e.g., combinations of elements from dependent claims that depend upon the same independent claim.

**Aspects of the Disclosure**

In various aspects, the present disclosure pertains to and includes at least the following aspects.

Aspect 1. A thermoplastic composition comprising:

(a) a polyamide component comprising (1) a polyamide produced by the polycondensation of a diamine component containing 70 mol% or higher of m-xylylenediamine and a dicarboxylic acid component containing 70 mol% or higher of a C4-C20 $\alpha,\omega$-linear aliphatic dicarboxylic acid, (2) copolymers of the polyamide of (1), (3) polyamide blends comprising the polyamide of (1), or (4) a combination thereof

(b) at least one polycarbonate-siloxane copolymer having a siloxane content of from 5 wt% to 36 wt%; and

(c) a copolyestercarbonate copolymer comprising isophthalate-terephthalate-resorcinol ester units and polycarbonate monomer units.

Aspect 2. The thermoplastic composition according to Aspect 1, wherein the at least one polycarbonate-siloxane copolymer is transparent or opaque.

Aspect 3. The thermoplastic composition according to Aspect 1 or 2, wherein the composition comprises a first polycarbonate-siloxane copolymer having a siloxane content of from 5 wt% to 10 wt% and a second polycarbonate-siloxane copolymer having a siloxane content of from 15 wt% to 25 wt%.

Aspect 4. The thermoplastic composition according to any of Aspects 1 to 3, wherein the polycarbonate monomer units comprise bisphenol-A.

Aspect 5. The thermoplastic composition according to any of Aspects 1 to 4, wherein the copolyestercarbonate copolymer has a ratio of isophthalate-terephthalate-resorcinol ester units to polycarbonate monomer units of from 20:80 to 90:10.

Aspect 6. The thermoplastic composition according to any of Aspects 1 to 4, wherein the copolyestercarbonate copolymer has a ratio of isophthalate-terephthalate-resorcinol ester units to polycarbonate monomer units of from 22:78 to 18:82.

Aspect 7. The thermoplastic composition according to any of Aspects 1 to 6, wherein the composition comprises:

from 59 wt% to 98.5 wt% of the polyamide component;
from 1 wt% to 40 wt% of the at least one polycarbonate-siloxane copolymer having a siloxane content of from 5 wt% to 36 wt%; and
from 0.5 wt% to 35 wt% of the copolyestercarbonate copolymer,
wherein the combined weight percent value of all components does not exceed 100 wt%, and all weight percent values are based on the total weight of the composition.

Aspect 8. The thermoplastic composition according to any of Aspects 1 to 7, wherein the composition comprises:

from 75 wt% to 97 wt% of the polyamide component;
from 2 wt% to 24 wt% of the at least one polycarbonate-siloxane copolymer having a siloxane content of from 5 wt% to 36 wt%; and
from 1 wt% to 23 wt% of the copolyestercarbonate copolymer,
wherein the combined weight percent value of all components does not exceed 100 wt%, and all weight percent values are based on the total weight of the composition.

Aspect 9. The thermoplastic composition according to Aspect 7 or 8, wherein the composition comprises from 1.5 wt% to 15 wt% of a first polycarbonate-siloxane copolymer having a siloxane content of from 15 wt% to 25 wt% and from 4.5 wt% to 15 wt% of a second polycarbonate-siloxane copolymer having a siloxane content of from 5 wt% to 10 wt%.

Aspect 10. The thermoplastic composition according to any of Aspects 1 to 9, wherein the polyamide component comprises polyamide-MXD6.

Aspect 11. The thermoplastic composition according to any of Aspects 1 to 10, wherein the composition has a transmission of at least 72% and a haze of less than 50%, as measured in accordance with ASTM D1003, illuminant C, at a thickness of 0.8 millimeter.

Aspect 12. The thermoplastic composition according to any of Aspects 1 to 11, wherein the composition comprises at least one additional additive.

Aspect 13. The thermoplastic composition according to Aspect 12, wherein the at least one additional additive comprises an acid scavenger, an anti-drip agent, a thermal stabilizer, an antioxidant, an antistatic agent, a chain extender, a colorant, a flow promoter, a lubricant, a mold release agent, a plasticizer, a quenching agent, a flame retardant, a UV absorber, an impact modifier, a blowing agent, a reinforcing agent, glass flakes, glass spheres, mineral fillers, a phenolic antioxidant, a phosphite stabilizer, or a combination thereof.

Aspect 14. An article comprising the thermoplastic composition according to any of Aspects 1 to 13.

Aspect 15. The article according to Aspect 14, wherein the article is a component of a display application.

Aspect 16. The article according to Aspect 14 or 15, wherein the article is in a form of an extruded film.

## EXAMPLES

The following examples are put forth so as to provide those of ordinary skill in the art with a complete disclosure and description of how the compounds, compositions, articles, devices and/or methods claimed herein are made and evaluated, and are intended to be purely exemplary and are not intended to limit the disclosure. Efforts have been made to ensure accuracy with respect to numbers (e.g., amounts, temperature, etc.), but some errors and deviations should be accounted for. Unless indicated otherwise, parts are parts by weight, temperature is in °C or is at ambient temperature, and pressure is at or near atmospheric. Unless indicated otherwise, percentages referring to composition are in terms of wt%.

There are numerous variations and combinations of reaction conditions, e.g., component concentrations, desired solvents, solvent mixtures, temperatures, pressures and other reaction ranges and conditions that can be used to optimize the product purity and yield obtained from the described process. Only reasonable and routine experimentation will be required to optimize such process conditions.

The compounding for the natural compositions used a 25 mm twin screw extruder according to the conditions listed in Table 1. Molten polymer strands were cooled in a water batch and pelletized, dried for 2 h at 80 °C, and then 60 mm x 60 mm plaques were molded (thickness: 0.8 mm).

**Table 1 - Extrusion and Molding Processing Conditions** n

| Extrusion Profile | | | Molding Profile | | |
|---|---|---|---|---|---|
| Intake Zone Temp | (°C) | 50 | Hopper Temp | (°C) | 40 |
| Zone 1 Temp | (°C) | 190 | Zone 1 Temp | (°C) | 210 |
| Zone 2 Temp | (°C) | 220 | Zone 2 Temp | (°C) | 230 |
| Zone 3 Temp | (°C) | 240 | Zone 3 Temp | (°C) | 250 |
| Zone 3 Temp | (°C) | 250 | Nozzle Temp | (°C) | 260 |
| Zone 4 Temp | (°C) | 260 | Mold Temp | (°C) | 90 |
| Zone 5 temp | (°C) | 250 | Screw Speed | (rpm) | 25 |
| Zone 6 Temp | (°C) | 250 | Back Pressure | (bar) | 5 |
| Zone 7 Temp | (°C) | 250 | Switch point | (mm) | 4 |
| Zone 8 Temp | (°C) | 250 | Injection Speed | (mm·s-1) | 65 |
| Zone 9 Temp | (°C) | 255 | Holding Time | (s) | 10 |
| Screw Speed | (rpm) | 300 | Cooling Time | (s) | 20 |
| Throughput | (kg·h-1) | 22 | Approx. Cycle Time | (s) | 35 |
| Vacuum 1 | (bar) | max | | | |

Transmission and haze were measured using a 0.8 mm molded plaque in accordance with ASTM D1003, illuminant C using a BYK haze-gard I from BYK-Gardner instruments.

Siloxane content in the compositions including different PC-Si copolymers varying with siloxane content were calculated as shown in Table 2:

**Table 2 - Calculation of Siloxane Content in Compositions**

| | Component | Mw (g/mol) | Mol% | wt% (Mw*Mol%) | wt% of siloxane in copolymer | wt% of siloxane in blend |
|---|---|---|---|---|---|---|
| PC-Si copolymer with 40% siloxane content | Siloxane | 84 | 40 | 33.6 | 18.0 ([33.6/(33.6+153)] *100) | 18*wt% in blend (18*0.1=1.8wt% for 10% copolymer in blend) |
| | PC | 255 | 60 | 153 | | |
| PC-Si copolymer with 20% siloxane content (C9030P) | Siloxane | 84 | 20 | 16.8 | 7.6 ([16.8/(16.8+204)] *100) | 7.6*wt% in blend (7.6*0.1=0.76wt% for 10% C9030P in the blend) |
| | PC | 255 | 80 | 204.0 | | |
| PC-Si copolymer with 6% siloxane content (C9030T) | Siloxane | 84 | 6 | 5.0 | 2.1 ([5.0/(5.0+239.7)] *100) | 2.1*wt% in blend (2.1*0.1 =0.21wt% for 10% C9030T in the blend) |
| | PC | 255 | 94 | 239.7 | | |

Materials used in the comparative and example compositions are provided in Table 3:

**Table 3 - Materials**

| Component |
|---|
| Polyamide MXD6 S6007. Polyamide copolymer produced by polycondensation of MXD6 (m-xylylenediamine) and adipic acid (Mitsubishi Gas Chemical) |
| PC-Siloxane copolymer (40% siloxane content) (SABIC) |
| PC-Siloxane copolymer (20% siloxane content) (C9030P) (SABIC) |
| PC-Siloxane copolymer (6.5% siloxane content) (C9030T) (SABIC) |
| SLX 2080 (Copolymer of BPA polycarbonate and iso- and terephthalate esters of resorcinol (20/80 isophthalate-terephthalate-resorcinol/BPA) (SABIC) |
| SLX 9010 (Copolymer of BPA polycarbonate and iso- and terephthalate esters of resorcinol (90/10 isophthalate-terephthalate-resorcinol/BPA) (SABIC) |
| $TiO_2$ (Kronos) |
| Cycloaliphatic epoxy, 7-oxabicyclo[4.1.0]heptane-3-carboxylic acid,7-oxabicyclo[4.1.0]hept-3-ylmethyl ester, CAS number: 2386-87-0 (Dow Chemical) |
| Tris(2,4-di-t-butylphenyl)phosphite (TBPP) (CAS number: 31570-04-4) (BASF) |
| N,N -hexamethylene bis 3,5-di-tert-butyl-4-hydroxyhydrocinnamamide (Irganox 1098, CAS number: 23128-74-7) (BASF) |
| Tinuvin 770 DF (Bis(2,2,6,6,-tetramethyl-4-piperidyl) sebaceate, CAS number 52829-07-9) (BASF) |

As noted herein, there is a need for transparent blends of thermoplastic resins with polyamides providing excellent dispersion to semiconductor nanocrystals (e.g., quantum dots) while protecting them from degradation by oxygen under blue LED light exposure. Such compositions are stable under high temperature/shear conditions, can be extruded into a film and can eliminate the reliance on barrier films. Transparent blends of polyamide (PA) MXD6 and PC-Si copolymer are excellent candidates for this, but such blends have high haze, are opaque, and/or are immiscible.

Transparent blends of PA MXD6 and PC-siloxane copolymer were formed by adding copolyestercarbonate copolymer (SLX2080) as shown in Tables 4A and 4B. Unless otherwise indicated, all of the compositions described herein were compounded on a twin screw extruder and molded into 0.8 mm thick plaques.

**Table 4A - Polyamide/PC-Si Copolymer Compositions**

| **Component (wt%)** | **C4.1** | **C4.2** | **C4.3** | **C4.4** | **C4.5** |
|---|---|---|---|---|---|
| PC-Si copolymer (20% siloxane content) | 23.83 | 17.87 | 11.92 | 9.93 | 8.94 |
| PC-Si copolymer (6.5% siloxane content) | - | - | - | - | - |
| PC-Si copolymer (40% siloxane content) | - | - | - | - | - |
| SLX2080 | 5.96 | 11.92 | 17.87 | 19.86 | 20.85 |
| MXD6 | 69.51 | 69.51 | 69.51 | 69.51 | 69.51 |
| Cycloaliphatic epoxy | 0.25 | 0.25 | 0.25 | 0.25 | 0.25 |
| TBPP | 0.15 | 0.15 | 0.15 | 0.15 | 0.15 |
| Irganox 1098 | 0.2 | 0.2 | 0.2 | 0.2 | 0.2 |
| Tinuvin 770 DF | 0.1 | 0.1 | 0.1 | 0.1 | 0.1 |
| Total | 100 | 100 | 100 | 100 | 100 |
| Si content in blend (wt%) | 1.81 | 1.36 | 0.907 | 0.756 | 0.680 |
| **Transmission (%)** | 61.1 | 66.6 | 73.2 | 74.4 | 76.9 |
| **Haze (%)** | 70.5 | 54.1 | 50.1 | 45.5 | 36.8 |

**Table 4B - Polyamide/PC-Si Copolymer Compositions**

| Component (wt%) | C4.6 | C4.7 | C4.8 | C4.9 | C4.10 |
|---|---|---|---|---|---|
| PC-Si copolymer (20% siloxane content) | 7.05 | - | 9.93 | - | |
| PC-Si copolymer (6.5% siloxane content) | - | 26.07 | - | - | |
| PC-Si copolymer (40% siloxane content) | - | - | - | 2.98 | |
| SLX2080 | 22.74 | 3.72 | - | 26.81 | |
| MXD6 | 69.51 | 69.51 | 89.37 | 69.51 | 99.3 |
| Cycloaliphatic epoxy | 0.25 | 0.25 | 0.25 | 0.25 | 0.25 |
| TBPP | 0.15 | 0.15 | 0.15 | 0.15 | 0.15 |
| Irganox 1098 | 0.2 | 0.2 | 0.2 | 0.2 | 0.2 |
| Tinuvin 770 DF | 0.1 | 0.1 | 0.1 | 0.1 | 0.1 |
| Total | 100 | 100 | 100 | 100 | 100 |
| Si content in blend (wt%) | 0.536 | 0.537 | 0.756 | 0.537 | - |
| **Transmission (%)** | 77.7 | 82.7 | 67.4 | 71.2 | 84.8 |
| **Haze (%)** | 35.9 | 26.5 | 54.6 | 49.3 | 31.4 |

From the data it was observed that SLX2080 helps to modify the refractive index of the PC phase to match the index of refraction of the polyamide phase. It also helps to improve the compatibility between the polyamide and PC-Si copolymer resin, resulting in smaller PC-siloxane domains dispersed in a continuous polyamide phase. Comparing C4.4 and C4.8 also shows that the haze reduction and transmission increase observed resulted from addition of SLX2080, as the siloxane content in these two blends was the same (0.756 wt%).

Transparency increase and haze decrease is not only derived from the siloxane content in the blend. For example, C4.7, a ternary blend of polyamide (MXD6), PC-Si copolymer (6.5% siloxane content) and copolyestercarbonate copolymer (SLX2080) resulted a further 5% increase in transmission and 9.4% decrease in haze as compared to C4.6 while both compositions have the same siloxane content (0.54 wt%) after blending. In contrast, C4.9 including the same level of siloxane content, but based on PC-Si copolymer having a 40% Si content, had higher haze compared to C4.6 and C4.7.

PC-Si copolymers including 20 wt% and 6.5 wt% siloxane content were prepared; the compositions and selected properties are shown in Table 5:

**Table 5 - Polyamide/PC-Si Copolymer Compositions**

| Component (wt%) | C5.1 | C5.2 | C5.3 | C5.4 | C5.5 |
|---|---|---|---|---|---|
| PC-Si (20% siloxane content) | 13.31 | 10.43 | 7.94 | 8.94 | 2.58 |
| PC-Siloxane copolymer (6.5% siloxane content) | 13.31 | 10.43 | 16.88 | 17.87 | 5.66 |
| SLX2080 | 3.18 | 8.94 | 4.97 | 2.98 | 1.69 |
| MXD6 | 69.51 | 69.51 | 69.51 | 69.51 | 89.35 |
| Cycloaliphatic epoxy | 0.25 | 0.25 | 0.25 | 0.25 | 0.12 |
| TBPP | 0.15 | 0.15 | 0.15 | 0.15 | 0.25 |
| Irganox 1098 | 0.2 | 0.2 | 0.2 | 0.2 | 0.25 |
| Tinuvin 770 DF | 0.1 | 0.1 | 0.1 | 0.1 | 0.1 |
| Total | 100 | 100 | 100 | 100 | 100 |
| Si content in blend (wt%) | 1.29 | 1.01 | 0.952 | 1.05 | 0.313 |
| **Transmission (%)** | 75.9 | 77.3 | 79.6 | 67.3 | 77.5 |
| **Haze (%)** | 35.9 | 37.4 | 34.6 | 67.9 | 48.0 |

From the data it was observed that by blending PC-Si copolymers having 20 and 6.5% siloxane content, higher transmission and lower haze could be achieved for the same amount of siloxane content in the blend (compare to the compositions in Tables 4A and 4B). For example, C5.1 and C4.2 had a similar siloxane content (1.29 wt% vs 1.36 wt%) after blending, but C5.1 had 18% lower haze and 9.3% higher transmission. Further, the effect is more pronounced in C5.3, which included 8 wt% PC-Si copolymer (20% siloxane content), 17 wt% PC-Si copolymer (6.5% siloxane content) and 5 wt% copolyestercarbonate copolymer. The C5.3 composition is particularly suitable for use with semiconductor nanocrystals due to its high transparency, low haze and reasonably high siloxane content (about 1 wt% in the blend). This would protect the semiconductor nanocrystals during high temperature/shear processing conditions. In addition, the siloxane domains of the poly(carbonate-siloxane) block copolymers have a preferable adherence to the semiconductor nanocrystals, which helps to keep them separate during the film formation process and maintains a homogeneous dispersion in the final semiconductor nanocrystal film.

Surprisingly, a further increase in the siloxane content in the blend to 1.06 wt% and a subsequent reduction in copolyestercarbonate copolymer (SLX2080) content as shown in C5.4 resulted in a decrease in transmission and an increase in haze. A comparison between C5.2 and C5.4, having similar siloxane contents in blend (about 1%), demonstrates the compatibilization role of the copolyestercarbonate copolymer on reducing the haze in these blends.

Additional formulations based on binary blends of MXD6 and PC-Si copolymer (6.5% siloxane content) were prepared and are shown in Table 6. Plaques were formed as set forth above for the transmission and haze measurements:

**Table 6 - Polyamide/PC-Si Copolymer Compositions**

| **Component (wt%)** | **C6.1** | **C6.2** | **C6.3** | **C6.4** |
|---|---|---|---|---|
| PC-Siloxane copolymer (6.5% siloxane content) | 29.79 | 19.86 | 9.93 | 2.98 |
| MXD6 | 69.51 | 79.44 | 89.37 | 96.32 |
| Cycloaliphatic epoxy | 0.25 | 0.25 | 0.25 | 0.25 |
| TBPP | 0.15 | 0.15 | 0.15 | 0.15 |
| Irganox 1098 | 0.2 | 0.2 | 0.2 | 0.2 |
| Tinuvin 770 DF | 0.1 | 0.1 | 0.1 | 0.1 |
| Total | 100 | 100 | 100 | 100 |
| Si content in blend (wt%) | 0.613 | 0.409 | 0.204 | 0.061 |
| **Transmission (%)** | 81.0 | 77.3 | 76.7 | 81.3 |
| **Haze (%)** | 39.5 | 44.8 | 40.2 | 30.4 |
| **Melt processability/Strand quality** | Poor | Poor | Poor | Poor |

From these results it was observed that though the C6.2-C6.4 compositions were favorable in terms of transmission and haze values, they exhibited a break in the extruded strand (i.e., die swell) and were thus difficult for film processing using conventional melt processing methods.

Additional compositions including PC-Si Copolymer were prepared and tested as shown in Table 7:

**Table 7 - Polyamide/PC-Si Copolymer (40% Siloxane Content) Compositions**

| **Component (wt%)** | **C7.1** | **C7.2** | **C7.3** | **C7.4** | **C7.5** | **C7.6** | **C7.7** | **C7.8** |
|---|---|---|---|---|---|---|---|---|
| PC-Siloxane copolymer (40% siloxane content) | 5.96 | 8.94 | 11.92 | 14.90 | 20.85 | 3.97 | 7.94 | 6.95 |
| SLX2080 | 23.83 | 20.85 | 17.87 | 14.90 | 8.94 | 35.75 | 31.78 | 27.80 |
| MXD6 | 69.51 | 69.51 | 69.51 | 69.51 | 69.51 | 59.58 | 59.58 | 64.55 |
| Cycloaliphatic epoxy | 0.25 | 0.25 | 0.25 | 0.25 | 0.25 | 0.25 | 0.25 | 0.25 |
| TBPP | 0.15 | 0.15 | 0.15 | 0.15 | 0.15 | 0.15 | 0.15 | 0.15 |
| Irganox 1098 | 0.2 | 0.2 | 0.2 | 0.2 | 0.2 | 0.2 | 0.2 | 0.2 |
| Tinuvin 770 DF | 0.1 | 0.1 | 0.1 | 0.1 | 0.1 | 0.1 | 0.1 | 0.1 |
| Total | 100 | 100 | 100 | 100 | 100 | 100 | 100 | 100 |

(continued)

| Component (wt%) | C7.1 | C7.2 | C7.3 | C7.4 | C7.5 | C7.6 | C7.7 | C7.8 |
|---|---|---|---|---|---|---|---|---|
| Si content in blend (wt%) | 1.07 | 1.61 | 2.15 | 2.68 | 3.75 | 0.715 | 1.43 | 1.25 |
| **Transmission (%)** | 67.0 | 70.4 | 57.2 | 60.2 | 56.2 | 73.3 | 66.6 | 67.9 |
| **Haze (%)** | 67.5 | 90.3 | 99.6 | 100 | 100 | 45.3 | 75.5 | 69.0 |

Comparing, for example, composition C5.2 with C7.1, which have similar siloxane content in the blend (1.01 wt% vs. 1.07 wt%) shows that higher transmission (77.3%) and lower haze (37.4%) can be obtained by using other PC-Si copolymers. In general the compositions including the PC-Si copolymer having a 40 wt% siloxane content have lower transmission and higher haze.

Further compositions including PC-Siloxane copolymer (40% siloxane content) and copolyestercarbonate copolymer (SLX9010) were prepared and tested as shown in Table 8:

**Table 8 - Polyamide/PC-Si Copolymer (40% Siloxane Content) Compositions**

| Component (wt%) | C8.1 | C8.2 | C8.3 |
|---|---|---|---|
| PC-Siloxane copolymer (40% siloxane content) | 5.96 | 14.90 | 11.92 |
| SLX9010 | 23.83 | 14.90 | 17.87 |
| MXD6 | 69.51 | 69.51 | 69.51 |
| Cycloaliphatic epoxy | 0.25 | 0.25 | 0.25 |
| TBPP | 0.15 | 0.15 | 0.15 |
| Irganox 1098 | 0.2 | 0.2 | 0.2 |
| Tinuvin 770 DF | 0.1 | 0.1 | 0.1 |
| Total | 100 | 100 | 100 |
| Si content in blend (wt%) | 1.07 | 2.68 | 2.15 |
| **Transmission (%)** | 50.3 | 41.8 | 42.2 |
| **Haze (%)** | 98.3 | 100 | 100 |

Composition C8.1 has the same siloxane content and component loadings as composition C7.1 but include a different copolyestercarbonate copolymer (SLX9010 instead of SLX2080). From this data it is observed that C7.1 has higher transmission and lower haze. Similarly, comparison of compositions C7.3 to C8.3 or C7.4 to C8.2, reveals that higher transmission can be achieved by using a copolyestercarbonate copolymer having a higher PC monomer than isophthalate-terephthalate-resorcinol monomer content (e.g., SLX2080).

Additional compositions including PC-Si copolymer (40% siloxane content) were prepared and tested as shown in Table 9:

**Table 9 - Additional Compositions Including MXD6 and PC-Si Copolymer (40% Siloxane Content)**

| Component (wt%) | C9.1 | C9.2 | C9.3 | C9.4 | C9.5 |
|---|---|---|---|---|---|
| PC-Si (40% siloxane content) | 2.98 | 9.93 | 19.86 | 29.79 | 39.72 |
| MXD6 | 96.32 | 89.37 | 79.44 | 69.51 | 59.58 |
| Cycloaliphatic epoxy | 0.25 | 0.25 | 0.25 | 0.25 | 0.25 |
| TBPP | 0.15 | 0.15 | 0.15 | 0.15 | 0.15 |
| Irganox 1098 | 0.2 | 0.2 | 0.2 | 0.2 | 0.2 |
| Tinuvin 770 DF | 0.1 | 0.1 | 0.1 | 0.1 | 0.1 |
| Total | 100 | 100 | 100 | 100 | 100 |
| Si content in blend (wt%) | 0.537 | 1.79 | 3.58 | 5.36 | 7.15 |

(continued)

| Component (wt%) | C9.1 | C9.2 | C9.3 | C9.4 | C9.5 |
|---|---|---|---|---|---|
| Transmission (%) | 63.1 | 47.0 | 40.7 | 37.1 | 36.2 |
| Haze (%) | 94.7 | 100 | 100 | 100 | 100 |

From these results it is observed that as the siloxane content in the blend increases, transmission decreases. Further, comparing C9.1 to C4.9 - which have a similar total siloxane content - shows that inclusion of a copolyestercarbonate copolymer (SLX2080) in the blend increases transmission and reduces haze.

Additional composition blends were prepared and tested as shown in Table 10:

**Table 10 - Additional Compositions**

| Component (wt%) | C10.1 | C10.2 | C10.3 | C10.4 | C10.5 | C10.6 |
|---|---|---|---|---|---|---|
| PC-Siloxane copolymer (20% siloxane content) | 2.98 | 9.93 | 19.86 | 29.79 | 39.72 | 2.98 |
| MXD6 | 96.32 | 89.37 | 79.44 | 69.51 | 59.58 | 69.51 |
| SLX2080 | - | - | - | - | - | 26.81 |
| Cycloaliphatic epoxy | 0.25 | 0.25 | 0.25 | 0.25 | 0.25 | 0.25 |
| TBPP | 0.15 | 0.15 | 0.15 | 0.15 | 0.15 | 0.15 |
| Irganox 1098 | 0.2 | 0.2 | 0.2 | 0.2 | 0.2 | 0.2 |
| Tinuvin 770 DF | 0.1 | 0.1 | 0.1 | 0.1 | 0.1 | 0.1 |
| Total | 100 | 100 | 100 | 100 | 100 | 100 |
| Si content in blend (wt%) | 0.227 | 0.756 | 1.51 | 2.27 | 3.02 | 0.227 |
| **Transmission (%)** | 75.1 | 67.4 | 61.0 | 55.9 | 62.2 | 78.0 |
| **Haze (%)** | 51 | 54.6 | 71.9 | 79.1 | 99.7 | 48.2 |

The Table 10 blends included PC-Si copolymer (20% siloxane content). Similar to the blends in Tables 7-9, as the siloxane content in the blend increases, transmission decreases. But overall, transmission values are much higher and the haze values are much lower than those that include PC-Si copolymer (40% siloxane content). This could be due to the lower amount of siloxane content present in the blends.

Further, comparing composition CI0.2 to C4.4, which have a similar siloxane content (about 0.76 wt%), it is observed that the inclusion of a copolyestercarbonate copolymer (SLX2080) results in an increase in transmission (from 67.4% to 74.4%) and a decrease in haze (from 54.6% to 45.5%). Similarly, the inclusion of a copolyestercarbonate copolymer in composition C10.6 results in a 2.9% increase in transmission and 2.8% decrease in haze as compared to composition C10.1 even though both compositions have the same siloxane content.

The above description is intended to be illustrative, and not restrictive. For example, the above-described examples (or one or more aspects thereof) may be used in combination with each other. Other aspects can be used, such as by one of ordinary skill in the art upon reviewing the above description. The Abstract is provided to comply with 37 C.F.R. §1.72(b), to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed aspect. Thus, the following claims are hereby incorporated into the Detailed Description as examples or aspects, with each claim standing on its own as a separate aspect, and it is contemplated that such aspects can be combined with each other in various combinations or permutations. The scope of the disclosure should be determined with reference to the appended claims, along with the full scope of equivalents to which such claims are entitled.

## Claims

1. A thermoplastic composition comprising:

(a) a polyamide component comprising (1) a polyamide produced by the polycondensation of a diamine component containing 70 mol% or higher of m-xylylenediamine and a dicarboxylic acid component containing 70 mol% or higher of a C4-C20 $\alpha,\omega$-linear aliphatic dicarboxylic acid, (2) copolymers of the polyamide of (1), (3) polyamide blends comprising the polyamide of (1), or (4) a combination thereof;
(b) at least one polycarbonate-siloxane copolymer having a siloxane content of from 5 wt% to 36 wt%; and
(c) a copolyestercarbonate copolymer comprising isophthalate-terephthalate-resorcinol ester units and polycarbonate monomer units.

**2.** The thermoplastic composition according to claim 1, wherein the at least one polycarbonate-siloxane copolymer is transparent or opaque.

**3.** The thermoplastic composition according to claim 1 or 2, wherein the composition comprises a first polycarbonate-siloxane copolymer having a siloxane content of from 5 wt% to 10 wt% and a second polycarbonate-siloxane copolymer having a siloxane content of from 15 wt% to 25 wt%.

**4.** The thermoplastic composition according to any of claims 1 to 3, wherein the polycarbonate monomer units comprise bisphenol-A.

**5.** The thermoplastic composition according to any of claims 1 to 4, wherein the copolyestercarbonate copolymer has a ratio of isophthalate-terephthalate-resorcinol ester units to polycarbonate monomer units of from 20:80 to 90:10.

**6.** The thermoplastic composition according to any of claims 1 to 4, wherein the copolyestercarbonate copolymer has a ratio of isophthalate-terephthalate-resorcinol ester units to polycarbonate monomer units of from 22:78 to 18:82.

**7.** The thermoplastic composition according to any of claims 1 to 6, wherein the composition comprises:

from 59 wt% to 98.5 wt% of the polyamide component;
from 1 wt% to 40 wt% of the at least one polycarbonate-siloxane copolymer having a siloxane content of from 5 wt% to 36 wt%; and
from 0.5 wt% to 35 wt% of the copolyestercarbonate copolymer,
wherein the combined weight percent value of all components does not exceed 100 wt%, and all weight percent values are based on the total weight of the composition.

**8.** The thermoplastic composition according to any of claims 1 to 7, wherein the composition comprises:

from 75 wt% to 97 wt% of the polyamide component;
from 2 wt% to 24 wt% of the at least one polycarbonate-siloxane copolymer having a siloxane content of from 5 wt% to 36 wt%; and
from 1 wt% to 23 wt% of the copolyestercarbonate copolymer,
wherein the combined weight percent value of all components does not exceed 100 wt%, and all weight percent values are based on the total weight of the composition.

**9.** The thermoplastic composition according to claim 7 or 8, wherein the composition comprises from 1.5 wt% to 15 wt% of a first polycarbonate-siloxane copolymer having a siloxane content of from 15 wt% to 25 wt% and from 4.5 wt% to 15 wt% of a second polycarbonate-siloxane copolymer having a siloxane content of from 5 wt% to 10 wt%.

**10.** The thermoplastic composition according to any of claims 1 to 9, wherein the polyamide component comprises polyamide-MXD6.

**11.** The thermoplastic composition according to any of claims 1 to 10, wherein the composition has a transmission of at least 72% and a haze of less than 50%, as measured in accordance with ASTM D1003, illuminant C, at a thickness of 0.8 millimeter.

**12.** The thermoplastic composition according to any of claims 1 to 11, wherein the composition comprises at least one additional additive.

**13.** The thermoplastic composition according to claim 12, wherein the at least one additional additive comprises an acid scavenger, an anti-drip agent, a thermal stabilizer, an antioxidant, an antistatic agent, a chain extender, a colorant,

a flow promoter, a lubricant, a mold release agent, a plasticizer, a quenching agent, a flame retardant, a UV absorber, an impact modifier, a blowing agent, a reinforcing agent, glass flakes, glass spheres, mineral fillers, a phenolic antioxidant, a phosphite stabilizer, or a combination thereof.

**14.** An article comprising the thermoplastic composition according to any of claims 1 to 13, wherein the article is a component of a display application.

**15.** The article according to claim 14, wherein the article is in a form of an extruded film.

Europäisches Patentamt
European Patent Office
Office européen des brevets

# EUROPEAN SEARCH REPORT

Application Number
EP 21 20 9985

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2018/065392 A1 (WU TONG [CN] ET AL) 8 March 2018 (2018-03-08)<br>* paragraph [0008]; claims 1, 3, 16; tables 1, 4, 6 *<br>* paragraph [0032] *<br>* paragraph [0024] *<br>* paragraph [0082] *<br>* paragraph [0002] *<br>----- | 1-15 | INV.<br>C08G69/26<br>C08L77/06<br>C08G77/448<br>B82Y20/00 |

TECHNICAL FIELDS SEARCHED (IPC)

C08G
C08L
B82Y

The present search report has been drawn up for all claims

1

| Place of search | Date of completion of the search | Examiner |
|---|---|---|
| Munich | 9 May 2022 | Ojea Jimenez, Isaac |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 21 20 9985

This annex lists the patent family members relating to the patent documents cited in the above-mentioned European search report. The members are as contained in the European Patent Office EDP file on
The European Patent Office is in no way liable for these particulars which are merely given for the purpose of information.

09-05-2022

| Patent document cited in search report | Publication date | Patent family member(s) | Publication date |
|---|---|---|---|
| US 2018065392 A1 | 08-03-2018 | CN 107250275 A | 13-10-2017 |
| | | EP 3259310 A1 | 27-12-2017 |
| | | KR 20170109013 A | 27-09-2017 |
| | | KR 20180121682 A | 07-11-2018 |
| | | US 2018065392 A1 | 08-03-2018 |
| | | WO 2016132336 A1 | 25-08-2016 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2017096227 A
- WO 2020161595 A
- US 9663710 B

### Non-patent literature cited in the description

- *CHEMICAL ABSTRACTS,* 80-05-7
- *CHEMICAL ABSTRACTS,* 2386-87-0
- *CHEMICAL ABSTRACTS,* 31570-04-4
- *CHEMICAL ABSTRACTS,* 23128-74-7
- *CHEMICAL ABSTRACTS,* 52829-07-9